# EUROPÄISCHE PATENTSCHRIFT

(11) **EP 1 315 685 B1**
(45) Veröffentlichungstag und Bekanntmachung des Hinweises auf die Patenterteilung: **08.12.2004**
(21) Anmeldenummer: 01980323.8
(22) Anmeldetag: 03.09.2001
(51) Int. Cl.: C04B 26/04, C04B 14/10, E04D 1/00

(54) **VERWENDUNG EINES POLYMERMODIFIZIERTEN FORMKÖRPERS AUS TON ZUM DECKEN VON DÄCHERN**
USE OF A POLYMER-MODIFIED CLAY MOULDING FOR COVERING ROOFS
UTILISATION D'UN CORPS MOULE EN ARGILE, MODIFIE AUX POLYMERES, POUR LE RECOUVREMENT DES TOITS

(30) Priorität: 04.09.2000 DE 10043453
(43) Veröffentlichungstag der Anmeldung: 04.06.2003
(73) Patentinhaber: BASF Aktiengesellschaft, 67063 Ludwigshafen (DE)
(72) Erfinder: SANDOR, Mario, 67283 Obrigheim (DE); SCHWARTZ, Manfred, 67227 Frankenthal (DE); BECHERT, Bertold, 67269 Grünstadt (DE); PAKUSCH, Joachim, 67346 Speyer (DE); DENU, Hans-Jürgen, 67159 Friedelsheim (DE); KNÖFEL, Dietbert, 57074 Siegen (DE); BÖTTGER, Karl-Georg, 57078 Siegen (DE)
(74) Vertreter: Thalhammer, Wolfgang, Dr.
(86) Internationale Anmeldenummer: PCT/EP2001/010133
(87) Internationale Veröffentlichungsnummer: WO 2002/020422

(56) Entgegenhaltungen:
- EP-A- 0 887 327
- EP-A- 1 041 054
- DE-A- 19 921 815
- US-A- 4 659 749
- US-A- 5 571 856
- US-A- 5 863 975
- CHEMICAL ABSTRACTS, vol. 116, no. 10, 9. März 1992 (1992-03-09) Columbus, Ohio, US; abstract no. 90107f, H. SAKURAI, ET AL: Seite 414; XP000316841 & JP 03 247413 A (ID.) 5. November 1991 (1991-11-05)

## Beschreibung

Die vorliegende Erfindung betrifft die Verwendung eines Formkörpers aus Ton, die mit Polymeren modifiziert sind, Zum Decken von Dächern.

Unter Formkörpern aus Ton versteht man dreidimensionale Gebilde aus einer mineralischen Masse, die als Hauptbestandteil ein Tonmineral enthalten. Tonmineralien-haltige Formkörper sind aus dem Stand der Technik auch als Tonkeramiken, tonkeramische Erzeugnisse bzw. als Erzeugnisse aus tonkeramischen Werkstoffen bekannt (vgl. Ullmanns Enzyklopädie der Technischen Chemie, 4.Aufl., Bd.13, S. 712).

Tonkeramische Erzeugnisse des Standes der Technik werden in der Regel hergestellt, indem man eine wasserhaltige, plastisch verformbare oder fließfähige, Tonmineralien-haltige mineralische Masse oder ein feuchtes Tonmineralien-haltiges Pulver in die gewünschte Form bringt, das Wasser in einem Trocknungsprozess entfernt und den so erhaltenen Formkörper zum eigentlichen keramischen Werkstoff bei Temperaturen oberhalb 900°C brennt. Durch diesen Brennprozess erlangen die tonkeramischen Werkstoffe ihre eigentliche Festigkeit.

Tonkeramische Werkstoffe zeichnen sich durch eine hohe chemische Inertheit, beispielsweise gegenüber Witterungseinflüssen aus. Aus diesem Grunde werden seit langer Zeit Baustoffe wie Bausteine, beispielsweise Dachbausteine wie Dachziegel, Rohre, z.B. für Abwasser, säurefeste Steine und Baukeramiken aus tonkeramischen Werkstoffen gefertigt.

Tonkeramische Werkstoffe bzw. Formkörper aus tonkeramischen Werkstoffen, insbesondere aus groben tonkeramischen Werkstoffen, haben jedoch den Nachteil einer geringen Druck- und Biegezugfestigkeit sowie einer geringen Elastizität. Dies führt dazu, dass sie bei mechanischer Belastung beschädigt werden, beispielsweise zerbrechen oder an ihren Oberflächen Abplatzungen erleiden. Beispielsweise werden Dachbausteine aus Ton häufig durch Hagelschlag beschädigt oder gar zerstört.

Der vorliegenden Erfindung lag daher die Aufgabe zugrunde, neue Formkörper auf Basis von Tonmineralien bereitzustellen, die ein verbessertes mechanisches Eigenschaftsprofil besitzen.

Diese Aufgabe konnte überraschenderweise dadurch gelöst werden, dass man zur Herstellung der Formkörper eine Zubereitung verwendet, die neben einer mineralischen Masse auf Basis von Tonmineralien als Hauptbestandteil ein hydrophobes, filmbildendes Polymerisat in gleichmäßiger Verteilung enthält. Hierbei werden Formkörper aus Ton erhalten, die ein hydrophobes, filmbildendes Polymerisat in gleichmäßiger Verteilung enthalten. Unter gleichmäßiger Verteilung versteht man hier, dass das Polymer keine geschlossenen Domänen bildet, die wesentlich größer als die Gefügegröße der Bestandteile der Tonmineralien sind.

Demnach betrifft die vorliegende Erfindung die Verwendung eines Formkörpers aus Ton, der eine mineralische Masse auf Basis ein oder mehrerer Tonmineralien als Hauptbestandteil und wenigstens ein im Formkörper gleichmäßig verteiltes, hydrophobes filmbildendes Polymerisat enthält.

Unter mineralischen Massen auf Basis von Tonmineralien versteht man Massen aus mineralischen Bestandteilen, die als Hauptbestandteil, d.h. in Mengen > 50 Gew.-%, insbesondere > 80 Gew.-%, wenigstens ein Tonmineral wie Kaolinit, Illit, Halloysit und Montmorillonit sowie gegebenenfalls davon verschiedene Silikate, Kieselsäuren, Alumosilikate wie Feldspäte, Calciumcarbonat, Quarzsand etc. als Nebenbestandteile enthalten. Derartige Massen sind im Handel als Tone erhältlich. Eine bevorzugte Ausführungsform der Erfindung betrifft einen Formkörper auf Basis von Illitischem Ton.

Die vorliegende Erfindung betrifft sowohl Formkörper aus Feinton mit Korngrössen < 2 µm als auch Formkörper aus Grobton bzw. Schluff mit Korngrössen im Bereich von 2 bis 20 µm (vgl. Ullmanns Enzyklopädie der Technischen Chemie, 3. Aufl. Bd. 17, S. 484). Eine weitere bevorzugte Ausführungsform der Erfindung betrifft Formkörper aus einem tonkeramischen Werkstoff, worin die maximale Gefügegrösse der mineralischen Bestandteile 0,2 mm überschreitet und die auch als grobkeramische Erzeugnisse bezeichnet werden. Derartige Werkstoffe werden erfindungsgemäß zur Herstellung von Dachbausteinen verwendet. Unter Dachbausteinen versteht man hier neben den herkömmlichen Dachpfannen auch Ortgangsteine, Firststeine, Stufensteine, Entlüftungssteine und andere zum Dekken von Dächern verwendete Dachelemente aus Ton.

Die erfindungsgemäß zur Modifizierung der Tonmineralien eingesetzten Polymerisate sind filmbildend. Hierunter versteht man, dass die Polymerisatteilchen des filmbildenden Polymerisats bei einer Temperatur, die unterhalb der Herstellungstemperatur des Formkörpers liegt, zu einem polymeren Film zerfließen. Die Temperatur, oberhalb derer eine Filmbildung auftritt, wird auch als Mindestfilmbildetemperatur (MFT) bezeichnet.

Eine gleichmäßige Filmbildung des bei der Herstellung des Formkörpers verwendeten hydrophoben Polymerisats ist in der Regel dann gewährleistet, wenn die Glasübergangstemperatur T_{g} des Polymerisats unterhalb 80°C, vorzugsweise unterhalb 50°C liegt. Unter der Glasübergangstemperatur wird hier die gemäß ASTM D3418-82 durch Differentialthermoanalyse (DSC) ermittelte "mid point temperature" verstanden (siehe auch Zosel, Farbe und Lack 82 (1976), S. 125-134 sowie DIN 53765). Für eine hinreichende Festigkeit des erfindungsgemäßen Formkörpers ist es von vorteil, wenn die Glasübergangstemperatur des Polymeren wenigstens -20°C und insbesondere wenigstens 0°C beträgt. Im Hinblick auf die Elastizität ist es außerdem günstig, wenn die Glasübergangstemperatur Tg einen Wert von 50°C, insbesondere 30°C, nicht überschreitet. Die Glasübergangstemperatur von Polymerisaten, die aus ethylenisch ungesättigten Monomeren aufgebaut sind, kann in bekannter Weise über die Monomerzusammensetzung gesteuert werden (T.G. Fox, Bull. Am. Phys. Soc. (Ser. II) 1, 123 [1956] und Ullmanns Encyclopedia of Industrial Chemistry 5. Auflage, Vol. A21, Weinheim (1989) S. 169).

Um eine ausreichende Festigkeit des Formkörpers zu erreichen, ist es in der Regel erforderlich, dass er wenigstens 0,2 Gew.-Teile, vorzugsweise wenigstens 0,5 Gew.-Teile und insbesondere wenigstens 1 Gew.-Teil hydrophobes, filmbildendes Polymerisat, bezogen auf 100 Gew.-Teile mineralische Bestandteile enthält. In der Regel werden Mengen oberhalb 20 Gew.-Teilen, bezogen auf 100 Gew.-Teile mineralische Bestandteile, nicht erforderlich sein. Vorzugsweise enthält der Formkörper nicht mehr als 15 Gew.-Teile, insbesondere nicht mehr als 10 Gew.-Teile und besonders bevorzugt nicht mehr als 5 Gew.-Teile des hydrophoben, filmbildenden Polymerisats, bezogen auf 100 Gew.-Teile mineralische Bestandteile.

Erfindungsgemäß ist das verwendete Polymerisat hydrophob. Derartige Polymersate sind dadurch gekennzeichnet, dass sie in Wasser unlöslich sind und ihre Polymerfilme nur eine geringe Wasseraufnahme, d.h. unterhalb 40 g/100 g Polymerfilm, insbesondere unterhalb 30 g/100g Polymerfilm, zeigen. Typische hydrophobe Polymerisate sind aus ethylenisch ungesättigten Monomeren M aufgebaut, die in der Regel wenigstens 80 Gew.-%, insbesondere wenigstens 90 Gew.-%, ethylenisch ungesättigte Monomere A mit einer Wasserlöslichkeit < 60 g/l und insbesondere < 30 g/l (25°C und 1 bar) umfassen, wobei bis zu 30 Gew.-%, z.B. 5 bis 25 Gew.-% der Monomere A durch Acrlynitril und/oder Methacrylnitril ersetzt sein können. Daneben enthalten die Monomere A noch 0,5 bis 20 Gew.-% von den Monomeren A verschiedene Monomere B. Hier und im Folgenden sind alle Mengenangaben für Monomere in Gew.-% auf 100 Gew.-% Monomere M bezogen.

Monomere A sind in der Regel einfach ethylenisch ungesättigt oder konjugierte Diolefine. Beispiele für Monomere A sind:
- Ester einer α,β-ethylenisch ungesättigten C₃-C₆-Monocarbonsäure oder C₄-C₈-Dicarbonsäure mit einem C₁-C₁₀-Alkanol. Vorzugsweise handelt es sich dabei um Ester der Acrylsäure oder Methacrylsäure, wie Methyl(meth)acrylat, Ethyl(meth)acrylat, n-Butyl(meth)acrylat, t-Butyl(meth)acrylat, 2-Ethylhexyl(meth)acrylat etc.;
- vinylaromatische Verbindungen, wie Styrol, 4-Chlorstyrol, 2-Methylstyrol etc.;
- Vinylester aliphatischer Carbonsäuren mit vorzugsweise 1 bis 10 C-Atomen, wie Vinylacetat, Vinylpropiat, Vinyllaurat, Vinylstearat, Versaticsäurevinyl-ester etc.;
- Olefinen, wie Ethylen oder Propylen;
- konjugierten Diolefinen, wie Butadien oder Isopren;
- Vinylchlorid oder Vinylidenchlorid.

Bevorzugte filmbildende Polymerisate sind ausgewählt unter den nachfolgend aufgeführten Polymerklassen I bis IV:
I) Copolymerisaten, die als Monomer A Styrol und wenigstens einen C₁-C₁₀-Alkylester der Acrylsäure und gegebenenfalls einen oder mehrere C₁-C₁₀-Alkylester der Methacrylsäure einpolymerisiert enthalten;
II) Copolymerisaten, die als Monomer A Styrol und wenigstens ein konjugiertes Dien sowie gegebenenfalls (Meth)acrylsäureester von C₁-C₈-Alkanolen, Acrylnitril und/oder Methacrylnitril einpolymerisiert enthalten;
III) Copolymerisaten, die als Monomere A Methylacrylat, wenigstens einen C₁-C₁₀-Alkylester der Acrylsäure und gegebenenfalls einen C₂-C₁₀-Alkylester der Methacrylsäure einpolymerisiert enthalten;
IV) Copolymerisaten, die als Monomer A wenigstens einen Vinylester einer aliphatischen Carbonsäure mit 2 bis 10 C-Atomen und wenigstens ein C₂-C₆-Olefin sowie gegebenenfalls einen oder mehrere C₁-C₁₀-Alkylester der Acrylsäure und/oder der Methacrylsäure einpolymerisiert enthalten.

Typische C₁-C₁₀-Alkylester der Acrylsäure in den Copolymerisaten der Klasse I bis IV sind Ethylacrylat, n-Butylacrylat, tert.-Butylacrylat, n-Hexylacrylat und 2-Ethylhexylacrylat.

Typische Copolymerisate der Klasse I enthalten als Monomere A 20 bis 80 Gew.-% und insbesondere 30 bis 70 Gew.-% Styrol und 20 bis 80 Gew.-%, insbesondere 30 bis 70 Gew.-%, wenigstens eines C₁-C₁₀-Alkylesters der Acrylsäure wie n-Butylacrylat, Ethylacrylat oder 2-Ethylhexylacrylat, jeweils bezogen auf die Gesamtmenge der Monomere A.

Typische Copolymerisate der Klasse II enthalten als Monomere A, jeweils bezogen auf die Gesamtmenge der Monomere A, 30 bis 85 Gew.-%, vorzugsweise 40 bis 80 Gew.-% und besonders bevorzugt 50 bis 75 Gew.-% Styrol und 15 bis 70 Gew.-%, vorzugsweise 20 bis 60 Gew.-% und besonders bevorzugt 25 bis 50 Gew.-% Butadien wobei 5 bis 20 Gew.-% der vorgenannten Monomere A durch (Meth)acrylsäureestern von C₁-C₈-Alkanolen und/oder durch Acrylnitril oder Methacrylnitril ersetzt sein könnnen.

Typische Copolymerisate der Klasse III enthalten als Monomere A, jeweils bezogen auf die Gesamtmenge der Monomere A, 20 bis 80 Gew.-%, vorzugsweise 30 bis 70 Gew.-% Methylmethacrylat und mindestens ein weiteres, vorzugsweise ein oder zwei weitere Monomere, ausgewählt unter Acrylsäureestern von C₁-C₁₀-Alkanolen, insbesondere n-Butylacrylat, 2-Ethylhexylacrylat und Ethylacrylat und gegebenenfalls einen Methacrylsäureester eines C₂-C₁₀-Alkanols in einer Gesamtmenge von 20 bis 80 Gew.-% und vorzugsweise 30 bis 70 Gew.-% einpolymerisiert.

Typische Copolymerisate der Klasse IV enthalten als Monomere A, jeweils bezogen auf die Gesamtmenge der Monomere A, 30 bis 90 Gew.-%, vorzugsweise 40 bis 80 Gew.-% und besonders bevorzugt 50 bis 75 Gew.-% einen vinylester einer aliphatischen Carbonsäure, insbesondere Vinylacetat und 10 bis 70 Gew.-%, vorzugsweise 20 bis 60 Gew.-% und besonders bevorzugt 25 bis 50 Gew.-% eines C₂-C₆-Olefins, insbesondere Ethylen und gegebenenfalls ein oder zwei weitere Monomere, ausgewählt unter (Meth)acrylsäureestern von C₁-C₁₀-Alkanolen in einer Menge von 1 bis 15 Gew.-% einpolymerisiert.

Unter den vorgenannten Polymerisaten sind die Polymerisate der Klasse I besonders geeignet.

Als Monomere B kommen grundsätzlich alle Monomere in Betracht, die von den vorgenannten Monomeren verschieden und mit den Monomeren A copolymerisierbar sind. Derartige Monomere sind dem Fachmann bekannt und dienen in der Regel der Modifizierung der Eigenschaften des Polymerisats.

Bevorzugte Monomere B sind ausgewählt sind unter monoethylenisch ungesättigten Mono- und Dicarbonsäuren mit 3 bis 8 C-Atomen, insbesondere Acrylsäure, Methacrylsäure, Itaconsäure, deren Amiden wie Acrylamid und Methacrylamid, deren N-Alkylolamiden wie N-Methylolacrylamid und N-Methylolmethacrylamid, deren Hydroxy-C₁-C₄-alkylestern wie 2-Hydroxyethylacrylat, 2- und 3-Hydroxypropylacrylat, 4-Hydroxybutylacrylat 2-Hydroxyethylmethacrylat, 2-und 3-Hydroxypropylmethacrylat, 4-Hydroxybutylmethacrylat und monoethylenisch ungesättigten Monomeren mit Oligoalkylenoxid-Ketten vorzugsweise mit Polyethylenoxidketten mit Oligomerisierungsgraden vorzugsweise im Bereich von 2 bis 200, z.B. Monovinyl- und Monoallylether von Oligoethylenglykolen sowie Ester der Acrylsäure, der Maleinsäure oder der Methacrylsäure mit Oligoethylenglykolen.

Der Anteil der Monomere mit Säuregruppen beträgt vorzugweise nicht mehr als 10 Gew.-% und insbesondere nicht mehr als 5 Gew.-%, z.B. 0,1 bis 5 Gew.-%, bezogen auf die Monomere M. Der Anteil an Hydroxyalkylestern und Monomeren mit Oligoalkylenoxidketten liegt, sofern enthalten, vorzugsweise im Bereich von 0,1 bis 20 Gew.-% und insbesondere im Bereich von 1 bis 10 Gew.-%, bezogen auf die Monomere M. Der Anteil der Amide und N-Alkylolamide liegt, sofern enthalten, vorzugsweise im Bereich von 0,1 bis 5 Gew.-%.

Neben den vorgenannten Monomeren B kommen als weitere Monomere B auch vernetzende Monomere, wie Glycidylether und -ester, z.B. vinyl-, Allyl- und Methallylglycidylether, Glycidylacrylat und -methacrylat, die Diacetonylamide der obengenannten ethylenisch ungesättigten Carbonsäuren, z.B. Diaceton(meth)acrylamid, und die Ester der Acetylessigsäure mit den obengenannten Hydroxyalkylestern ethylenisch ungesättigter Carbonsäuren, z. B. Acetylacetoxyethyl(meth)acrylat in Betracht. Als Monomere B kommen weiterhin Verbindungen, die zwei nicht-konjugierte, ethylenisch ungesättigte Bindungen aufweisen, z.B. die Di- und Oligoester mehrwertiger Alkohole mit α,β-monoethylenisch ungesättigten C₃-C₁₀-Monocarbonsäuren wie Alkylenglykoldiacrylate- und -dimethacrylate, z.B. Ethylenglykoldiacrylat, 1,3-Butylenglykoldiacrylat, 1,4-Butylenglykoldiacrylat, Propylenglykoldiacrylat, sowie weiterhin Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Tricyclodecenyl(meth)acrylat, N,N'-Divinylimidazolin-2-on oder Triallylcyanurat in Betracht. Weiterhin sind als Monomere B auch Vinylsilane, z.B. Vinyltrialkoxysilane geeignet.

Um eine gleichmässige Verteilung des Polymerisats in dem Tonmineral, welches den Formkörper bildet, zu erreichen, hat es sich bewährt, wenn das Polymerisat in Form feinteiliger Partikel eingesetzt wird. Unter feinteiligen Polymerisaten versteht man solche, deren gewichtsmittlerer Teilchendurchmesser d₅₀ 10 µm und insbesondere 2 µm nicht überschreitet. Insbesondere liegt der gewichtsmittlere Teilchendurchmesser d₅₀ der Polymerisatteilchen im Bereich von 100 bis 2000 nm. Unter dem gewichtsmittleren Teilchendurchmesser d₅₀ versteht man den Teilchendurchmesser, der von 50 Gew.-% der Polymerisatteilchen unterschritten wird. Der gewichtsmittlere Teilchendurchmesser eines Polymerisats lässt sich in bekannter Weise an einer wässrigen Dipsersion der Teilchen durch Quasielastische Lichtstreung oder durch Messung in einer Ultrazentrifuge bestimmen.

Polymerisate mit derartigen Teilchendurchmessern liegen in der Regel als wässrige Polymerdispersionen oder in Form von Pulvern, die aus diesen Dispersionen durch verdampfen des Wassers erhältlich sind, vor. Zur Herstellung der erfindungsgemässen Formkörper werden daher Polymerisate in Form wässriger Polymerdispersionen, insbesondere solcher, die durch radikalische wässrige Emulsionspolymerisation der vorgenannten ethylenisch ungesättigten Monomere erhältlich sind, bevorzugt. Ebenso bevorzugt werden daraus hergestellte Polymerisatpulver sowie wässrige Dispersionen die durch Redispergieren der Polymerpulver in Wasser erhältlich sind. Verfahren zur Herstellung wässriger Polymerdispersionen als auch zur Herstellung von Polymerpulvern aus wässrigen Polymerdispersionen sind im Stand der Technik zahlreich beschrieben (siehe z.B. D. Distler, Wässrige Polymerdispersionen, Wiley VCH, Weinheim 1999; H. Warson, Synthetic Resin Emulsions, Ernest Benn Ltd., London 1972, S. 193-242). Sowohl wässrige Polymerdispersionen als auch die daraus hergestellten Pulver sind überdies kommerziell erhältlich, z.B. unter den ACRONAL® - STYRONAL® -, BUTO-FAN®-und STYROFAN®-Marken der BASF-Aktiengesellschaft, Ludwigshafen, Deutschland.

Die radikalische, wässrige Emulsionspolymerisation der Monomere M erfolgt in Gegenwart wenigstens einer oberflächenaktiven Substanz und wenigstens eines die radikalische Polymerisation auslösenden, vorzugsweise wasserlöslichen Initiators bei Temperaturen vorzugsweise im Bereich von 20 bis 120°C.

Als Initiatoren kommen Azoverbindungen, organische oder anorganische Peroxide, Salze der Peroxodischwefelsäure und Redox-Initiatorsysteme in Betracht. Vorzugsweise setzt man ein Salz der Peroxodischwefelsäure, insbesondere ein Natrium-, Kalium- oder Ammoniumsalz oder ein Redoxinitiatorsystem ein, das als Oxidationsmittel Wasserstoffperoxid oder ein organisches Peroxid wie tert.-Butylhydroperoxid und als Reduktionsmittel eine Schwefelverbindung enthält, die insbesondere ausgewählt ist unter Natriumhydrogensulfit, Natriumhydroxymethansulfinat und dem Hydrogensulfit-Addukt an Aceton.

Als oberflächenaktive Substanzen kommen die Üblicherweise für die Emulsionspolymerisation eingesetzten Emulgatoren und Schutzkolloide in Betracht. Bevorzugte Emulgatoren sind anionische und nichtionische Emulgatoren, die im Unterschied zu den Schutzkolloiden in der Regel ein Molekulargewicht unterhalb 2000 g/mol aufweisen und in Mengen von bis zu 0,2 bis 10 Gew.-%, vorzugsweise 0,5 bis 5 Gew.-%, bezogen auf das Polymerisat in der Dispersion bzw. auf die zu polymerisierenden Monomere M eingesetzt werden.

Zu den anionischen Emulgatoren zählen Alkali- und Ammoniumsalze von Alkylsulfaten (Alkylrest: C₈-C₂₀), von Schwefelsäurehalbestern ethoxylierter Alkanole (EO-Grad: 2 bis 50, Alkylrest: C₈ bis C₂₀) und ethoxylierter Alkylphenole (EO-Grad: 3 bis 50, Alkylrest: C₄-C₂₀), von Alkylsulfonsäuren (Alkylrest: C₈ bis C₂₀) und von Alkylarylsulfonsäuren (Alkylrest: C₄-C₂₀). Weitere geeignete anionische Emulgatoren finden sich in Houben-Weyl, Methoden der organischen Chemie, Band XIV/1, Makromolekulare Stoffe, Georg-Thieme-Verlag, Stuttgart, 1961, S. 192-208).

Zu den anionischen grenzflächenaktiven Substanzen zählen auch Verbindungen der allgemeinen Formel I, 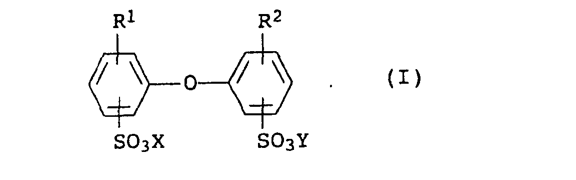 worin R¹ und R² Wasserstoff oder lineare oder verzweigte Alkylreste mit 6 bis 18 C-Atomen und insbesondere mit 6, 12 und 16 C-Atomen bedeuten, wobei R¹ und R² nicht beide gleichzeitig Wasserstoff sind. X und Y sind bevorzugt Natrium, Kalium oder Ammonium, wobei Natrium besonders bevorzugt ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z. B. aus der US-A-4,269,749.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₉), Ethoxylate langkettiger Alkohole (EO-Grad: 3 bis 50, Alkylrest: C₈-C₃₆), sowie Polyethylenoxid/Polypropylenoxid-Blockcopolymere. Bevorzugt werden Ethoxylate langkettiger Alkanole (Alkylrest: C₁₀-C₂₂, mittlerer Ethoxylierungsgrad: 3 bis 50) und darunter besonders bevorzugt solche auf Basis von Oxoalkoholen und nativen Alkoholen mit einem linearen oder verzweigten C₁₂-C₁₈-Alkylrest und einem Ethoxilierungsgrad von 8 bis 50.

Bevorzugt werden anionische Emulgatoren, insbesondere Emulgatoren der allgemeinen Formel I, oder Kombinationen aus wenigstens einem anionischen und einem nichtionischen Emulgator eingesetzt.

Geeignete Schutzkolloide sind beispielsweise Polyvinylalkohole, Stärke- und Cellulosederivate, Carboxylgruppen enthaltende Polymere wie Homo- und Copolymere der Acrylsäure und/oder der Methacrylsäure mit Comonomeren wie Styrol, Olefinen oder Hydroxyalkylestern, oder Vinylpyrrolidon enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden.

Selbstverständlich kann das Molekulargewicht der Polymere durch Zugabe von Reglern in einer geringen Menge, in der Regel bis zu 2 Gew.-%, bezogen auf die polymerisierenden Monomere M, eingestellt werden. Als Regler kommen insbesondere organische Thioverbindungen, ferner Allylalkohole und Aldehyde in Betracht. Bei der Herstellung der Butadien-enthaltenden Polymere der Klasse I werden häufig Regler in einer Menge von 0,1 bis 2 Gew.-%, vorzugsweise organische Thioverbindungen wie tert.-Dodecylmercaptan eingesetzt.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden. Die Monomeren können sowohl als Monomermischung als auch als wässrige Monomeremulsion der Polymerisation zugeführt werden.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419 sowie Encyclopedia of Polymer Science and Technology, Vol. 5, John wiley & Sons Inc., New York 1966, S. 847).

Im Anschluss an die eigentliche Polymerisationsreaktion ist es gegebenenfalls erforderlich, die erfindungsgemäßen, wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Nach Beendigung der Polymerisation werden die verwendeten Polymerdispersionen vor ihrer erfindungsgemäßen Verwendung häufig alkalisch, vorzugsweise auf pH-Werte im Bereich von 7 bis 10 eingestellt. Zur Neutralisation können Ammoniak oder organische Amine einsetzt, sowie vorzugsweise Hydroxide, wie Natriumhydroxid oder Calciumhydroxid verwendet werden.

Die Herstellung der erfindungsgemässen Formkörper kann in ähnlicher Weise wie die Herstellung konventioneller Formkörper aus tonkeramischen Werkstoffen erfolgen, wobei jedoch ein Brennschritt nicht erforderlich ist. In der Regel umfasst das Verfahren zur Herstellung der Formkörper die folgenden, nacheinander durchzuführenden Schritte:
i) Herstellen einer plastisch verformbaren, fliessfähigen oder pulverförmigen Masse durch vermischen ein oder mehrerer Tonmineralien-haltiger Massen mit einer wässrigen Dispersion eines hydrophoben filmbildenden Polymerisats oder eines daraus hergestellten Polymerpulvers und Wasser,
ii) Formen der Masse zu einem feuchten Formkörper und
iii) Trocknen des Formkörpers zur Entfernung des Wassers.

Schritt i erfolgt in der Regel durch einfaches Vermischen bzw. Homogenisieren der Komponenten: Wasser, Tonmineral bzw. Tonmineralien enthaltende mineralische Masse und Polymerisat, die vorzugsweise in Form einer wässrigen Polymerdispersion bzw. eines wässrigen Redispergats eines Polymerpulvers eingesetzt werden. Die erforderliche Menge an Wasser liegt bei plastischen Massen in der Regel bei 10 bis 30 Gew.-%, bezogen auf die mineralischen Bestandteil, und für fliessfähige Massen auch darüber z.B. bis 50 Gew.-%. Pulverförmige Massen enthalten in der Regel 5 bis 10 Gew.-% Wasser bezogen auf die mineralischen Bestandteile der Masse.

Die Formgebung der nach Schritt i erhaltenen Masse in Schritt ii erfolgt in Abhängigkeit von der Viskosität der Masse. Bei pulverförmige Massen erfolgt die Formgebung in der Regel durch Verpressen der Masse in geeigneten Presswerkzeugen. Die Formgebung fliessfähiger Massen erfolgt in der Regel nach Giessverfahren. Die Verarbeitung der erfindungsgemäss bevorzugten plastischer Massen erfolgt beispielsweise durch Extrusion durch Strangpressen vorzugsweise unter Anlegen von Unterdruck zur Entfernung eingeschlossener Luftporen, durch Streichpressen oder mittels Stempelpressen (zur Verarbeitung von tonmineralienhaltigen Zubereitungen siehe Ullmanns Enzyklopädie der technischen Chemie, 3. Auflage, Band 17 S. 486ff).

Die Fertigstellung der erfindungsgemässen mineralischen Formkörper erfolgt in Schritt iii durch Trocknen des in Schritt ii erhaltenen feuchten Formkörpers, wobei das Wasser entfernt wird und der erfindungsgemässe Formkörper seine Endfestigkeit erreicht. Schritt iii wird in der Regel bei Temperaturen im Bereich von 20°C bis 150°C, vorzugsweise bei 20°C bis 120°C durchgeführt, wobei auch höhere Temperaturen denkbar sind. Temperaturen oberhalb 200°C wird man in der Regel nicht anwenden, um eine Zersetzung des Polymeren zu vermeiden. Bei Temperaturen unterhalb 10°C ist der Trocknungsprozess in der Regel zu langsam um noch wirtschaftlich zu sein. Im Hinblick auf die mechanischen Eigenschaften ist insbesondere ein Trocknen oberhalb Raumtemperatur, z.B. im Bereich von 50°C bis 150°C und insbesondere im Bereich von 80°C bis 125°C vorteilhaft. Insbesondere hat es sich bewährt, wenn man die Trocknungstemperatur während des Trocknungsvorgangs dergestalt variiert, dass die Trocknungstemperatur gegen Ende des Trocknungsvorgangs wenigstens 20 K, insbesondere wenigstens 40 K, z.B. 40 bis 120 K, oberhalb der Trocknungstemperatur zu Beginn des Trocknungsvorgangs liegt. Insbesondere wird man die Trocknung von einer Ausgangstemperatur, die im Bereich der Umgebungstemperatur liegt zunächst auf eine 1. Temperatur anheben, die wenigstens 20 K, z.B. 20 bis 50 K oberhalb der Umgebungstemperatur liegt, anheben, diese Temperatur etwa 40% bis 80% der Gesamttrocknungsdauer beibehalten und anschließend auf eine zweite Temperatur, die wenigstens 10 K, vorzugsweise 10 bis 80 K oberhalb der 1. Temperatur liegt, anheben, bis die Trocknung beendet ist.

Zur Trocknung kommen die üblichen Trockeneinrichtungen in Betracht wie Kammertrockner, Trommeltrockner, Schaufeltrockner und Strahlungstrockner (vgl. Ullmanns Enzyklopädie der Technischen Chemie, 3. Aufl., Bd. 17, S. 459ff).

Überraschenderweise ist bei den erfindungsgemässen Formkörpern ein Brennprozess für das Erreichen der Endfestigkeit nicht erforderlich.

Die erfindungsgemässen Formkörper zeichnen sich durch hohe Biegezug- und Druckfestigkeiten und durch hohe Elastizitäten im Vergleich zu unmodifizierten Tonformkörpern aus. Das üblicherweise beim Trocknen feuchter, Tonmineralien-haltiger Massen beobachtete Schwinden wird nicht oder nur unwesentlich nachteilig beeiflusst, wobei das Schwinden stets masshaltig eintritt und somit für die Herstellung des Formkörpers von untergeordneter Bedeutung ist.

Es hat sich als vorteilhaft erwiesen, wenn man auf eine Hauptfläche der erfindungsgemäßen Formkörper, im Falle der Dachbausteine vorzugsweise auf die der Witterung ausgesetzten Seite eine pigmentierte, polymergebundene Beschichtung, vorzugsweise auf Basis einer wässrigen Polymerdispersion, aufbringt. Diese polymere Beschichtung kann sowohl vor als auch nach dem Trocknen in Schritt iii) aufgebracht werden. Vorzugsweise bringt man die polymergebundenen Beschichtungsmittel vor dem Trocknen der erfindungsgemäßen Formkörper auf und führt dann den so beschichteten Formkörper dem Abbindevorgang zu. Der Auftrag kann in an sich bekannter Weise durch Spritzen, Spachteln, Rakeln, Rollen oder Gießen erfolgen.

Als Beschichtungsmittel sind alle polymergebundene Beschichtungsmittel des Standes der Technik geeignet, die zur Beschichtung von konventionell gefertigten Betondachsteinen eingesetzt werden. Hierbei handelt es sich insbesondere um Beschichtungsmittel auf Basis wässriger Polymerdispersionen der oben genannten Polymerklassen I und III.

Die Polymere in den Beschichtungsmitteln weisen vorzugsweise eine Glasübergangstemperatur im Bereich von -20 bis +80°C und insbesondere im Bereich von 0 bis +50°C auf. Ihr molekularer Aufbau ist in der Regel mit dem der zur Modifizierung der Tonmineralien-enthaltenden Masse verwendeten Polymerisate vergleichbar.

Geeignete Beschichtungsmittel, wie sie zur Beschichtung konventionell gefertigter Betondachsteine beschrieben werden, können der EP-A 469 295, EP-A 492 210, EP 355 028, EP 383 002, EP-A 941 977, DE-A 197 49 642, DE-A 198 10 050, DE-A 40 03 909, DE-A 43 41 260 entnommen werden. Die in den vorgenannten Patentanmeldungen beschriebenen Beschichtungsmittel als auch die dort beschriebenen Beschichtungsverfahren für konventionell hergestellte Betondachbausteine können sämtlich auf die erfindungsgemäßen Formkörper übertragen werden. Insoweit wird auf die Offenbarung dieser Schriften in vollem Umfang Bezug genommen.

Die polymergebundenen Beschichtungsmittel werden in der Regel in pigmenthaltiger Form, d.h. in Form einer Farbe aufgebracht. Selbstverständlich kann man sie auch in Form einer pigmentfreien Zubereitung, d.h. in Form eines Klarlacks auf die zu beschichtende Fläche aufbringen.

Die polymergebundenen Beschichtungsmittel können in einer oder in mehreren Schichten auf die zu beschichtende Fläche des erfindungsgemäßen Formkörpers aufgebracht werden.

In einer ganz besonders bevorzugten Ausgestaltung des erfindungsgemäßen Verfahrens bringt man in einem ersten Schritt ein pigmentfreies Beschichtungsmittel auf Basis einer wässrigen Polymerdispersion, vorzugsweise einer Reinacrylat-Dispersion oder einer Styrol/Acrylat-Dispersion, auf den erfindungsgemäßen Formkörper, vorzugsweise im feuchten Zustand, auf. Auf den so mit einer polymergebundenen Beschichtung versehenen Formkörper bringt man in einem zweiten Schritt ein weiteres, polymergebundenes Beschichtungsmittel, vorzugsweise auf Basis einer styrol/Acrylat-Dispersion oder einer Reinacrylat-Dispersion auf. Das zweite Beschichtungsmittel ist in der Regel als Farbe formuliert, d.h. es enthält Farbpigmente und gegebenenfalls Füllstoffe. In derartigen Farben liegt der Gehalt an Pigment plus Füllstoff in der Regel im Bereich von 5 bis 100 Gew.-%, bezogen auf das in der Farbe enthaltene Polymer. Auf diese Farbbeschichtung kann man weitere pigmentfreie oder pigmenthaltige Beschichtungsmittel auf Basis wässriger Polymerdispersionen oder anderer Polymere aufbringen. Sofern die zweite Polymerbeschichtung mehrere verschiedene Polymerschichten umfasst, enthält die zunächst aufgetragene zweite Beschichtung in der Regel mehr Pigment als die danach aufgetragenen weiteren Schichten.

Die Auftragsmengen der einzelnen polymeren Beschichtungsmittel werden in der Regel so gewählt, dass die erste Beschichtung ein Flächengewicht von 50 bis 500 g/m² und die zweite und weitere Beschichtungen ein Gesamtflächengewicht von 50 bis 500 g/m² aufweisen (trocken gerechnet). Die erste Beschichtung dient dabei als Primer beziehungsweise als Haftvermittler für die zweite und die weiteren Beschichtungen.

Die Verwendung einer pigmenthaltigen Beschichtung (Farbe) hat den Vorteil, dass der erfindungsgemäße Formkörper nicht vollständig mit Pigmenten durchgefärbt sein muss, sondern nur auf den Sichtflächen die gewünschte Färbung aufweist. Dies spart zum einen Kosten, da die Pigmentmenge, die zur Erzielung des Farbeindrucks erforderlich ist, um mehr als die Hälfte reduziert werden kann, und erhöht andererseits die Breite der möglichen Einsatzmaterialien, die zum Teil erst noch durch den Zusatz von Pigment auf die gewünschte Farbgebung eingestellt werden müssen. Überraschenderweise liess sich bislang ein Farbauftrag bei konventionellen tonkeramischen Formkörpern nicht realisieren, da die Farbe nur schlecht haftete.

Die folgenden Beispiele sollen die Erfindung verdeutlichen, sind jedoch nicht einschränkend zu verstehen.

### I. Einsatzmaterialien

Als mineralische Masse wurde eine Mischung aus einem Illithaltiger Ton mit einer Korngröße unterhalb 2 µm und Sand eingesetzt.

### Polymerisat P1

Copolymerisat aus 63 Gew.-Teilen Styrol und 32 Gew.-Teilen Butadien, 2,5 Gew.-Teilen Acrylnitril und 2,5 Gew.-Teilen N-Methylacrylamid mit einer Glasübergangstemperatur von 17°C.

Polymerisat P1 wurde in Form einer 50 gew.-%igen wässrigen Polymerdispersion eingesetzt, die mit 1 Gew.-% ethoxiliertem C₁₃-Fettalkohol (EO8) und 1,5 Gew.-% des Natriumsalzes eines Schwefelsäurehalbesters von ethoxiliertem C₁₂-Alkohol (EO3) stabilisiert war. Die Polymerdispersion wies eine Mindestfilmbildetemperatur von 16°C auf.

### Polymerisat P2

Copolymerisat aus 54 Gew.-Teilen Styrol und 46 Gew.-Teilen 2-Ethylhexylacrylat sowie 2,6 Gew.-Teilen Acrylsäure, 1 Gew.-Teil Acrylamid und 0,5 Gew.-Teilen Methacrylamid mit einer Glasübergangstemperatur von 12 °C in Form einer 50 gew.-%igen wässrigen Polymerdispersion mit einer Mindestfilmbildetemperatur von 20°C. Die Dispersion enthielt zur Stabilisierung 0,4 Gew.-% Nonylphenolethoxilat (Ethoxilierungsgrad 25) und 1,2 Gew.-% des Natriumsalzes des Nonylphenolethoxilat-Schwe.felsäurehalbesters (Ethoxilierungsgrad 25).

### Polymerisat P3

Copolymerisat aus 62 Gew.-Teilen Styrol und 34 Gew.-Teilen n-Butylacrylat sowie 1,5 Gew.-Teilen Acrylsäure und 2,5 Gew.-Teilen N-Methylolmethacrylamid mit einer Glasübergangstemperatur von 34°C in Form einer 50 gew.-%igen wässrigen Polymerdispersion mit einer Mindestfilmbildetemperatur von 30°C.

### II Untersuchungsmethoden

Untersucht wurden Prismen, die im feuchten Zustand folgende Abmessungen aufwiesen 4 cm x 4 cm x 16 cm. Zur Herstellung der Prismen wurden 100 Gew.-Teile des pulverförmigen Tonminerals mit 20 ml Wasser und einer definierten Menge der Polymerdispersionen P1, P2 oder P3 zu einer plastisch verformbaren Masse vermengt. Die so erhaltene Masse wurde mit einem Extruder stranggepresst und mit einem Messer in die Stücke der oben angegebenen Länge zerteilt. Die Menge an Polymerdispersion wurde so bemessen, dass der Polymergehalt 3 Gew.-Teile auf 100 Gew.-Teile trockenes Tonmineral betrug. Anschließend wurden die Proben wahlweise 28 Tage bei 23°C und 50% Luftfeuchtigkeit oder 24 h bei 105°C getrocknet. Die so erhaltenen Prismen wurden hinsichtlich der Biegezug- und Druckfestigkeit sowie bezüglich des Schwindens beim Trocknen untersucht.

Die Messung der Biegezug- und Druckfestigkeit erfolgte nach DIN EN196.

Die Messung des Schwindens erfolgte nach D. Knöfel und P. Schubert, Handbuch Mörtel und Steinergänzungsstoffe in der Denkmalpflege, Verlag Ernst und Sohn, Berlin 1993.

Die Ergebnisse sind in Tabelle 1 und 2 angegeben.

**Tabelle 1:**

| Nicht getemperte Proben Trocknung über 28 d im Klima 23/50 | | | | |
|---|---|---|---|---|
| Probe | E_{dyn} [N/mm²] | β_{D} [N/mm²] ] | β_{BZ} [N/mm²] | ε_{S} [N/mm²] |
| Nullprobe | 8900 | 5,4 | 4,39 | 150 |
| Dispersion 1 | 11200 | 19,7 | 12,51 | 158 |
| Dispersion 2 | 10000 | 18,6 | 10,44 | 180 |
| Dispersion 3 | 9400 | 19,7 | 11,42 | 219 |
| E_{dyn} = dynamischer E-Modul β_{D} = Druckfestigkeit | | | | |
| ε_{S} = Schwinden β_{BZ} = Biegezugfestigkeit | | | | |

**Tabelle 2:**

| Getemperte Proben Proben wurden über 28 h bei 105°C getempert | | | | |
|---|---|---|---|---|
| Probe | E_{dyn} [N/mm²] | β_{D} [N/mm²] | β_{BZ} [N/mm²] | Es [N/mm²] |
| Nullprobe | 8400 | 8,6 | 1,70(*) | 154 |
| Dispersion 1 | 15700 | 23,8 | 14,56 | 155 |
| Dispersion 2 | 13700 | 29,3 | 18,44 | 187 |
| Dispersion 3 | 12300 | 30,8 | 19,32 | 218 |

| | | | | |
|---|---|---|---|---|
| E_{dyn} = dynamischer E-Modul β_{D} = Druckfestigkeit ε_{S} = Schwinden β_{BZ} = Biegezugfestigkeit (*) Versuch wurde nur an einem Probekörper durchgeführt, der bei Versuchsbeginn bereits Risse aufwies | | | | |

Die Ergebnisse in Tabelle 1 und Tabelle 2 zeigen, dass bereits geringe Mengen Polymerisat zu einer deutlichen Verbesserung der Druck- und Biegezugfestigkeit führen. Gleichzeitig führt der Einsatz von Polymerisat zu einer mäßigen bis guten Verbesserung des dynamischen E-Moduls.

## Patentansprüche

1. Verwendung eines Formkörpers aus Ton, der eine mineralische Masse auf Basis von Tonmineralien als Hauptbestandteil und wenigstens ein im Formkörper gleichmäßig verteiltes hydrophobes, filmbildendes Polymerisat enthält, in Form eines Dachbausteins zum Decken von Dächern.

2. Verwendung nach Anspruch 1, wobei der Formkörper 0,2 bis 20 Gew.-Teile Polymerisat, bezogen auf 100 Gew.-Teile mineralische Bestandteile enthält.

3. Verwendung nach einem der vorhergehenden Ansprüche, wobei das Polymerisat eine Glasübergangstemperatur im Bereich von -20 bis +80°C aufweist.

4. Verwendung nach einem der vorhergehenden Ansprüche, wobei das Polymerisat aufgebaut ist aus ethylenisch ungesättigten Monomeren M, umfassend
- 80 bis 99,5 Gew.-% ethylenisch ungesättigten Monomeren A mit einer Wasserlöslichkeit < 60 g/l (25°C und 1 bar)
- 0,5 bis 20 Gew.-% von den Monomeren A verschiedene Monomere B,
wobei alle Angaben in Gew.-% auf 100 Gew.-% Monomere M bezogen sind und worin bis zu 30 Gew.-% der Monomere A durch Acrylnitril und/oder Methacrylnitril ersetzt sein können.

5. Verwendung nach Anspruch 4, wobei die Polymerisate ausgewählt sind unter
I) Copolymerisaten, die als Monomer A Styrol und wenigstens einen C₁-C₁₀-Alkylester der Acrylsäure und gegebenenfalls einen oder mehrere C₁-C₁₀-Alkylester der Methacrylsäure einpolymerisiert enthalten;
II) Copolymerisaten, die als Monomer A Styrol und wenigstens ein konjugiertes Dien sowie gegebenenfalls (Meth)acrylsäureester von C₁-C₈-Alkanolen, Acrylnitril und/oder Methacrylnitril einpolymerisiert enthalten;
III) Copolymerisaten, die als Monomere A Methylacrylat, wenigstens einen C₁-C₁₀-Alkylester der Acrylsäure und gegebenenfalls einen C₂-C₁₀-Alkylester der Methacrylsäure einpolymerisiert enthalten;
IV) Copolymerisaten, die als Monomer A wenigstens einen Vinylester einer aliphatischen Carbonsäure mit 2 bis 10 C-Atomen und wenigstens ein C₂-C₆-Olefin sowie gegebenenfalls einen oder mehrere C₁-C₁₀-Alkylester der Acrylsäure und/oder der Methacrylsäure einpolymerisiert enthalten.

6. Verwendung nach Anspruch 4 oder 5, wobei die Monomere B ausgewählt sind unter monoethylenisch ungesättigten Mono- und Dicarbonsäuren mit 3 bis 8 C-Atomen, deren Amiden, deren N-Alkylolamiden, deren Hydroxy-C₁-C₄-alkylestern und monoethylenisch ungesättigten Monomeren mit Oligoalkylenoxid-Ketten.

7. Verwendung nach einem der vorhergehenden Ansprüche, wobei das Polymerisat durch radikalische wässrige Emulsionspolymerisation erhältlich ist.

8. Verwendung nach einem der vorhergehenden Ansprüche, wobei der Formkörper erhältlich ist durch
i) Herstellen einer plastisch verformbaren, fliessfähigen oder pulverförmigen Masse durch Vermischen ein oder mehrerer Tonmineralien mit einer wässrigen Dispersion eines hydrophoben filmbildenden Polymerisats oder eines daraus hergestellten Polymerpulvers und Wasser,
ii) Formen der plastischen Mischung zu einem feuchten Formkörper und
iii) Trocknen des Formkörpers zur Entfernung des Wassers.

9. Verwendung nach einem der vorhergehenden Ansprüche, wobei der Formkörper zusätzlich auf wenigstens einer der Hauptflächen eine polymergebundene pigmenthaltige Beschichtung aufweist.

## Claims

1. The use of a clay molding containing a mineral material based on clay minerals as the main component and at least one hydrophobic, film-forming polymer uniformly distributed in the molding, in the form of a roof building block for covering roots.

2. The use as claimed in claim 1, the molding containing from 0.2 to 20 parts by weight, based on 100 parts by weight of mineral components, of polymer.

3. The use as claimed in any of the preceding claims, the polymer having a glass transition temperature of from -20 to +80°C.

4. The use as claimed in any of the preceding claims, the polymer being composed of ethylenically unsaturated monomers M comprising
- from 80 to 99.5% by weight of ethylenically unsaturated monomers A having a water solubility of < 60 g/l (25°C and 1 bar)
- from 0.5 to 20% by weight of monomers B differing from the monomers A,
all data in % by weight being based on 100% by weight of monomers M and it being possible for 30% by weight of the monomers A to be replaced by acrylonitrile and/or methacrylonitrile.

5. The use as claimed in claim 4, the polymers being selected from
I) copolymers which contain, as monomer A, styrene and at least one C₁-C₁₀-alkyl ester of acrylic acid, and if required, one or more C₁-C₁₀-alkyl esters of methacrylic acid as polymerized units;
II) copolymers which contain, as monomer A, styrene and at least one conjugated diene and, if required, (meth)acrylates of C₁-C₈-alkanols, acrylonitrile and/or methacrylonitrile as polymerized units;
III)copolymers which contain, as monomers A, methyl acrylate, at least one C₁-C₁₀-alkyl ester of acrylic acid and, if required, a C₂-C₁₀-alkyl ester of methacrylic acid as polymerized units;
IV) copolymers which contain, as monomer A, at least one vinyl ester of an aliphatic carboxylic acid of 2 to 10 carbon atoms and at least one C₂-C₆-olefin and, if required, one or more C₁-C₁₀-alkyl esters of acrylic acid and/or of methacrylic acid as polymerized units.

6. The use as claimed in claim 4 or 5, the monomers B being selected from monoethylenically unsaturated mono- and dicarboxylic acids of 3 to 8 carbon atoms, their amides, their N-alkylolamides, their hydroxy-C₁-C₄-alkyl esters and monoethylenically unsaturated monomers having oligoalkylene oxide chains.

7. The use as claimed in any of the preceding claims, the polymer being obtainable by free radical aqueous emulsion polymerization.

8. The use as claimed in any of the preceding claims, the molding being obtainable by
i) preparation of a plastically deformable, flowable or pulverulent material by mixing one or more clay minerals with an aqueous dispersion of a hydrophobic film-forming polymer, or a polymer powder prepared therefrom, and water,
ii) molding of the plastic mixture to give a moist molding and
iii)drying of the molding in order to remove the water.

9. The use as claimed in any of the preceding claims, the molding additionally having a polymer-bound pigment-containing coating on at least one of the main surfaces.

## Revendications

1. Utilisation d'un corps moulé en argile, qui contient une masse minérale à base de minéraux argileux en tant que composant principal et au moins un polymère filmogène hydrophobe réparti de manière homogène dans le corps moulé, sous forme d'une tuile pour la couverture de toits.

2. Utilisation selon la revendication 1, où le corps moulé contient 0,2 à 20 parties en poids de polymère par rapport à 100 parties en poids de composants minéraux.

3. Utilisation selon l'une quelconque des revendications précédentes, où le polymère présente une température de transition vitreuse allant de -20°C à +80°C.

4. Utilisation selon l'une quelconque des revendications précédentes, où le polymère est composé de monomères M à insaturation éthylénique comprenant
- 80% à 99,5% en poids de monomères A à insaturation éthylénique présentant une hydrosolubilité inférieure à 60 g/L (à 25°C et sous une pression de 1 bar)
- 0,5% à 20% en poids de monomères B différents des monomères A,
toutes les proportions exprimées en % en poids se rapportant à 100% en poids de monomères M et jusqu'à 30% en poids des monomères A pouvant être remplacés par l'acrylonitrile et/ou le méthacrylonitrile.

5. Utilisation selon la revendication 4, où les polymères sont choisis parmi
I) des copolymères qui contiennent, sous forme polymérisée, en tant que monomère A, du styrène et au moins un ester alkylique en C₁ à C₁₀ de l'acide acrylique et éventuellement un ou plusieurs esters alkyliques en C₁ à C₁₀ de l'acide méthacrylique ;
II) des copolymères qui contiennent, sous forme polymérisée, en tant que monomère A, du styrène et au moins un diène conjugué ainsi qu'éventuellement des esters (méth)acryliques d'alcanols en C₁ à C₈, de l'acrylonitrile et/ou du méthacrylonitrile ;
III) des copolymères qui contiennent, sous forme polymérisée, en tant que monomère A, du méthacrylate, au moins un ester alkylique en C₁ à C₁₀ de l'acide acrylique et éventuellement un ester alkylique en C₂ à C₁₀ de l'acide méthacrylique ;
IV) des copolymères qui contiennent, sous forme polymérisée, en tant que monomère A, au moins un ester vinylique d'un acide carboxylique aliphatique possédant 2 à 10 atomes de carbone et au moins une oléfine en C₂ à C₆ ainsi qu'éventuellement un ou plusieurs esters alkyliques en C₁ à C₁₀ de l'acide acrylique et/ou de l'acide méthacrylique.

6. Utilisation selon la revendication 4 ou 5, où les monomères B sont choisis parmi des acides mono- et di-carboxyliques à insaturation monoéthylénique possédant 3 à 8 atomes de C, leurs amides, leurs N-alkylolamides, leurs esters hydroxy(alkyliques en C₁ à C₄) et des monomères à insaturation monoéthylénique contenant des chaînes oligo(oxyde d'alkylène).

7. Utilisation selon l'une quelconque des revendications précédentes, où le polymère peut être obtenu au moyen d'une polymérisation radicalaire en émulsion aqueuse.

8. Utilisation selon l'une quelconque des revendications précédentes, où le corps moulé peut être obtenu
i) en préparant une masse fluide ou pulvérulente à déformation plastique en mélangeant un ou plusieurs minéraux argileux avec une dispersion aqueuse d'un polymère filmogène hydrophobe ou une poudre polymère préparée à partir de celle-ci et de l'eau,
ii) en façonnant le mélange plastique pour former un corps moulé humide et
iii) en séchant le corps moulé pour éliminer l'eau.

9. Utilisation selon l'une quelconque des revendications précédentes, où le corps moulé présente en outre un revêtement contenant des pigments, lié par un polymère, sur au moins une des surfaces principales.
